(19) Europäisches Patentamt
European Patent Office
Office européen des brevets

(11) **EP 3 096 285 A1**

(12) **EUROPEAN PATENT APPLICATION**
published in accordance with Art. 153(4) EPC

(43) Date of publication:
**23.11.2016 Bulletin 2016/47**

(51) Int Cl.:
**G06Q 50/16** (2012.01)     **G06Q 50/06** (2012.01)

(21) Application number: **14878489.5**

(22) Date of filing: **11.12.2014**

(86) International application number:
**PCT/JP2014/082809**

(87) International publication number:
**WO 2015/107809 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **16.01.2014   JP 2014006158**

(71) Applicant: **Kabushiki Kaisha Toshiba**
**Minato-ku**
**Tokyo 105-8001 (JP)**

(72) Inventors:
• **MURAI Masahiko**
 **Tokyo 105-8001 (JP)**

• **MURAYAMA Dai**
 **Tokyo 105-8001 (JP)**
• **SAITO Masaaki**
 **Tokyo 105-8001 (JP)**
• **OTAKE Hiroaki**
 **Tokyo 105-8001 (JP)**
• **ASAKURA Hiraku**
 **Tokyo 105-8001 (JP)**
• **NOSAKA Takao**
 **Tokyo 105-8001 (JP)**

(74) Representative: **Moreland, David et al**
**Marks & Clerk LLP**
**Aurora**
**120 Bothwell Street**
**Glasgow G2 7JS (GB)**

(54) **OPERATING PLAN CREATION DEVICE, CONTROL DEVICE, OPERATING PLAN CREATION METHOD, AND PROGRAM**

(57)   An operation plan generation device of an embodiment includes a consumption amount computer, a cost computer, and an operation plan generator. The consumption amount computer is configured to compute an amount of primary energy consumption by a plurality of energy supply devices that generates energy to be supplied to a load. The cost computer is configured to compute a total cost for the plurality of energy supply devices to generate energy to be supplied to the load.

The operation plan generator is configured to generate an operation plan for the plurality of energy supply apparatuses to achieve at least one of a target relating to the amount of primary energy consumption and a target relating to the total cost, based on the amount of primary energy consumption computed by the consumption amount computer, and on the total cost computed by the cost computer.

FIG. 2

EP 3 096 285 A1

**Description**

TECHNICAL FIELD

Embodiments of the present invention relate to an operation plan generation device, a control device, an operation plan generation method, and a program.

BACKGROUND ART

In consideration of the environment, a push toward zero energy buildings (ZEB) has been taking place in recent years. According to a definition provided by the Japan Ministry of Economy, Trade, and Industry, "ZEB describes buildings in which the amount of primary energy consumed is reduced by means of increasing the energy saving performance of both the buildings and facilities, utilization of energy networks, onsite practical utilization of renewable energy, and the like, resulting in an annual net primary energy consumption amount of zero, or roughly zero." It is also desirable to consider energy costs in addition to the amount of primary energy consumption in the actual building.

PRIOR ART DOCUMENTS

PATENT DOCUMENTS

Patent Document 1: JP 2013-174412

SUMMARY OF THE INTENTION

PROBLEM TO BE SOLVED BY THE INVENTION

The problem to be solved by the present invention is to provide an operation plan generation device, a control device, an operation plan generation method, and a program capable of reducing energy costs while reducing the amount of primary energy consumption by energy supply apparatuses.

MEANS FOR SOLVING THE PROBLEM

An operation plan generation device of an embodiment includes a consumption amount computer, a cost computer, and an operation plan generator. The consumption amount computer is configured to compute an amount of primary energy consumed by plurality of energy supply apparatuses that generate energy to be supplied to a load. The cost computer is configured to compute a total cost for the plurality of energy supply apparatuses to generate energy to be supplied to the load. The operation plan generator is configured to generate an operation plan for the plurality of energy supply apparatuses to achieve at least one of a target relating to an amount of primary energy consumption and a target relating to the total cost, based on the amount of primary energy consumption computed by the consumption amount computer, and on the total cost computed by the cost computer..

BRIEF DESCRIPTION OF THE DRAWINGS

FIG. 1 is a diagram illustrating an example of an overall configuration of an operation plan generation device of a first embodiment and peripheral devices.

FIG. 2 is a diagram illustrating an example of an overall configuration of the operation plan generation device of the first embodiment.

FIG. 3 is a diagram illustrating an example of a relationship between a primary energy consumption amount and an energy cost relating to generating an operation plan according to the operation plan generation device of the first embodiment.

FIG. 4 is a diagram illustrating an example of a configuration of an annual operation plan generator provided to the operation plan generation device of the first embodiment.

FIG. 5 is a diagram illustrating an example of a configuration of a daily operation plan generator provided to the operation plan generation device of the first embodiment.

FIG. 6 is a flowchart illustrating a first example of operation of the operation plan generation device of the first embodiment.

FIG. 7 is a flowchart illustrating a second example of operation of the operation plan generation device of the first embodiment.

FIG. 8 is a flowchart illustrating a third example of operation of the operation plan generation device of the first embodiment.

FIG. 9 is a table illustrating an example of an energy generation unit cost for an energy supply apparatus relating to the operation plan generation device of the first embodiment.

FIG. 10 is a diagram for explaining an example of an operation plan generation method according to the operation plan generation device of the first embodiment.

FIG. 11 is a flowchart illustrating a fourth example of operation of the operation plan generation device of the first embodiment.

FIG. 12 is a flowchart illustrating a fifth example of operation of the operation plan generation device of the first embodiment.

FIG. 13 is a diagram illustrating an example of an overall configuration of an operation plan generation device of a second embodiment.

EMBODIMENTS FOR CARRYING OUT THE INVENTION

An operation plan generation device and a control device relating to embodiments are explained below with reference to the drawings.

First Embodiment

An example of an operation plan generation device of a first embodiment, peripheral devices, and aspects of connectivity are explained first.

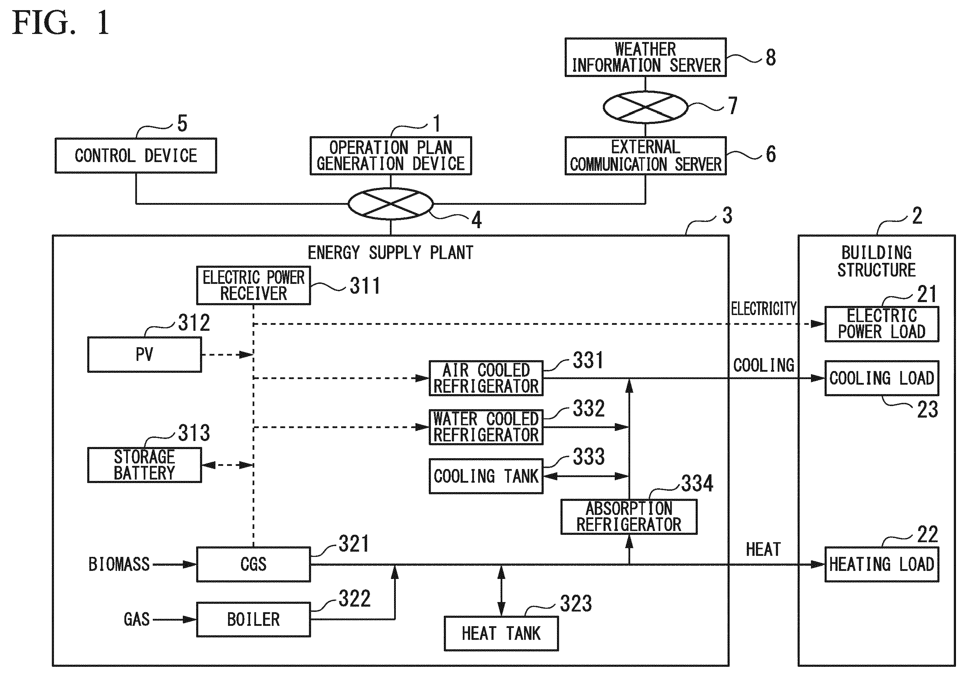

FIG. 1 is a diagram illustrating an example of an overall configuration of an operation plan generation device of a first embodiment and peripheral devices.
An operation plan generation device 1 according to the first embodiment is a device for generating an operation plan for an energy supply plant 3 that supplies energy such as electric power, cooling, heat, and the like to a load, which is a building structure 2 such as a building, a house, or the like. The term building structure includes architectural structures, architectural constructions, physical plants, facilities, and the like. Further, in this disclosure the energy supply plant 3 is provided with a plurality of energy supply apparatuses. The energy supply plant 3 indicates the entirety of the plurality of energy supply apparatuses. For example, an operation plan of the energy supply plant 3 may illustrate an operation plan of energy supply apparatuses provided to the energy supply plant 3.
The operation plan generation device 1 generates an operation plan based on a primary energy consumption amount and an energy cost. Primary energy is energy taken directly from a natural source such as coal, oil, natural gas, firewood, water, atomic, wind, atomic power, geothermal energy, solar energy, or the like. In this description, a primary energy consumption amount is computed by multiplying amounts of electric power, gas, and biomass fuel consumed by a primary energy conversion factor. Note that an amount of energy generated by so-called renewable energy such as solar power generation, biomass cogeneration, and the like is subtracted from the primary energy consumption amount. Further, an energy cost is a cost needed for an energy supply apparatus to generate energy. Energy costs fluctuate based on season, time of day, and the like. Energy costs also differ according to the energy supply apparatus used to generate energy.
The operation plan generation device 1 and the energy supply plant 3 are connected by an internal network 4. The internal network 4 is additionally connected to a control device 5 and to an external communication server 6. The operation plan generation device 1, the energy supply plant 3, the control device 5, and the external communication server 6 can perform communication with one another.

The control device 5 controls energy supply apparatuses provided to the energy supply plant 3 based on an operation plan generated by the operation plan generation device 1. Specifically, the control device 5 controls the energy supply apparatuses based on control setting values received from the operation plan generation device 1 that indicate operation, stoppage, and operating states such as output levels, and the like. Further, the control device 5 stores operation data of the energy supply plant 3 and monitors operation states such as whether or not the energy supply plant 3 is operating normally. The control device 5 controls the energy supply plant 3 based on an operation plan so that an amount of energy corresponding to the energy demand of the building structure 2, which fluctuates from moment to moment, can be supplied. The control device 5 is, for example, a server device provided with known server functionality, and is the server device is provided with an internal central processing unit (CPU) and a memory device.

The external communication server 6 is connected to an external network 7. The external communication server 6 performs communication with a weather information server 8 through the external network 7. The weather information server 8 has past weather data, and future weather forecast data.

The external communication server 6 acquires past weather data and future weather forecast data from the weather information server 8. The external network 7 sends the acquired weather data to the operation plan generation device 1 through the internal network 4.

The internal network 4 and the external network 7 are information communication networks configured by, for example, a mobile telephone network, a personal handy phone system (PHS) network, a virtual private network (VPN), a dedicated communication line network, a wide area network (WAN), a local area network (LAN), a public switched telephone network (PSTN), or the like, or a combination thereof.

An example of energy flow from each type of energy supply apparatus provided to the energy supply plant 3 is explained next. The building structure 2 receives electric power, heat, and cooling energy. IN FIG. 1, energy demand for electric power, heat, and cooling energy are illustrated by an electric power load 21, a heating load 22, and a cooling load 23. The heat energy and the cooling energy may be supplied by using water as a medium, for example.

The energy supply plant 3 is provided with an electric power receiver 311, a photovoltaic (PV, solar power equipment) 312, a storage battery 313, a cogeneration system (CGS) 321, a boiler 322, a heat tank 323, an air cooled refrigerator 331, a water cooled refrigerator 332, a cooling tank 333, and an absorption refrigerator 334.

The electric power receiver receives electric power form an electric power company, and converts the power received to a voltage suitable for facilities.

The PV 312 is an electric power generator provided with a solar light panel for converting solar light energy into electric energy. The amount of electric energy supplied by the PV 312 changes according to weather conditions.

The storage battery 313 is a device that utilizes a secondary battery capable of performing both charging and discharging.

The CGS 321 is a system that performs electricity generation by using an internal combustion engine or an external combustion engine, and is capable of utilizing exhaust heat as heat. In the present embodiment, the CGS 321 uses biomass fuel as an energy source, but the CGS 321 may also use gas, for example, as an energy source.

The boiler 322 supplies heat using gas an energy source.

The heat tank 323 performs thermal storage using a heat medium reservoir.

The air cooled refrigerator 331 is an apparatus that supplies cold water according to a phase change of a cooling medium using air as a heat source.

The water cooled refrigerator 332 is an apparatus that supplies cold water according to a phase change of a cooling medium using water as a heat source.

The cooling tank 333 performs thermal storage using a thermal medium reservoir. The cooling tank 333 is a water thermal storage tank or an ice thermal storage tank, for example.

The absorption refrigerator 334 is an apparatus for supplying cooling water to a location between a cooling medium condenser and an evaporator, intervening in a reclamation process according to vapor absorption and a heat source.

As described above, among energy supply apparatuses, the air cooled refrigerator 331, the water cooled refrigerator 332, the cooling tank 333, and the absorption refrigerator 334 are cooling supply devices for performing the supply of cool air. Among these, the air cooled refrigerator 331 and the water cooled refrigerator 332 require electric power in order to generate cooling, and therefore the electric power receiver 311, the PV 312, and the storage battery 313 supply electric power to the air cooled refrigerator 331 and to the water cooled refrigerator 332 in addition to the building structure 2. Further, the absorption refrigerator 334 requires heat to generate cooling, and therefore the CGS 321, the boiler 322, and the heat tank 323 supply heat to the absorption refrigerator 334 in addition to the building structure 2. The CGS 321 and the boiler 322 are heat supply devices for generating heat. Further, the CGS 321 is also an electric power supply device for supplying electric power.

The storage battery 313, the heat tank 323, and the cooling tank 333 can store energy. The storage battery 313 stores electric power generated by the PV 312 and the CGS 321 when the energy cost for generating electric power is low, for example, and supplies electric power to the electric power load 21 when the energy cost is high. Further, the wet heat tank 323 stores heat generated by the CGS 321 and the boiler 322 when the energy cost for generating heat is low, for example, and supplies heat to the heating load 22 when the energy cost is high. Similarly, the cooling tank 333 stores cooling generated by the air cooled refrigerator 331, the water cooled refrigerator 332, and the absorption refrigerator 334 when the energy cost for generating cooling is low, for example, and supplies cooling to the cooling load 23 when the energy cost is high.

A configuration of the operation plan generation device 1 is explained next.

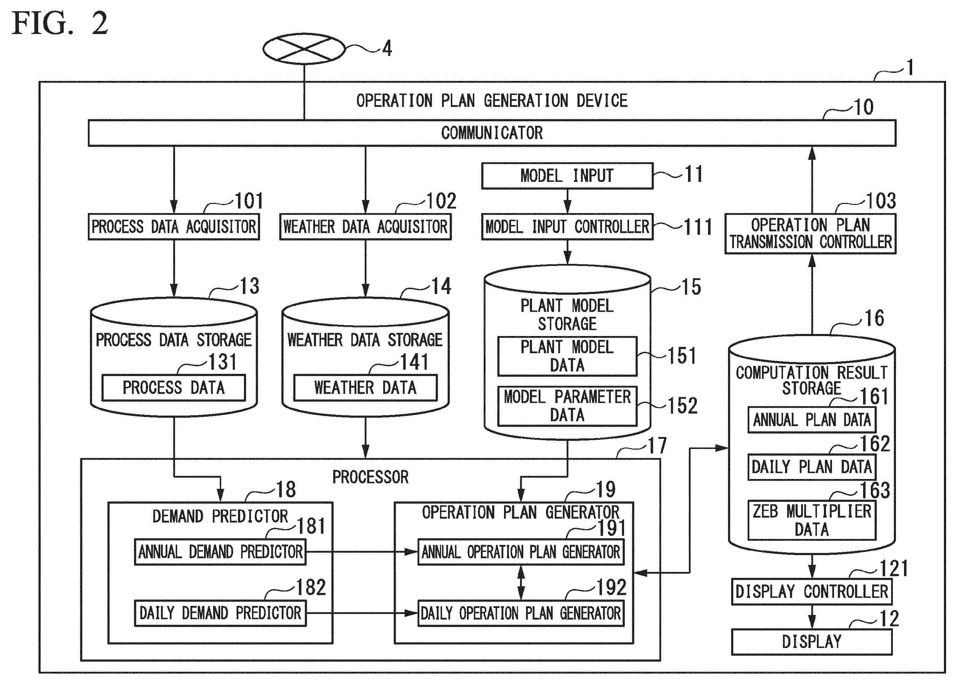

FIG. 2 is a diagram illustrating an example of an overall configuration of the operation plan generation device 1.

The operation plan generation device 1 is a server device provided with known server functionality, and the server device is provided with an internal CPU and a memory device. The memory device provided to the operation plan generation device 1 is provided with, for example, a hard disc drive (HDD), a flash memory, an electrically erasable programmable read only memory (EEPROM), a read only memory (ROM), a random access memory (RAM), or the like. The memory device stores various programs to be executed by the CPU, such as firmware and application programs. The memory device also stores results of processing executed by the CPU, and the like.

The operation plan generation device 1 possesses a communicator 10, a model input 11, a display 12, a process data storage 13, a weather data storage 14, a plant model storage 15, a computation result storage 16, a processor 17, a process data acquisitor 101, a weather data acquisitor 102, an operation plan transmission controller 103, a model input controller 111, and a display controller 121.

The communicator 10 is connected to the internal network 4, and performs communication with the control device 5 and the external communication server 6.

The model input 11 accepts plant model and plant parameter inputs for energy supply apparatuses provided to the energy supply plant 3. Plant models and plant parameters are described below. The model input 11 is provided with an input device such as a touch panel, a mouse, a keyboard, or the like, for example. Further, the model input 11 may also be provided with a communication interface connected to an external memory device for storing plant model data and model parameter data, and the communication interface may acquire the stored data.

The display 12 displays an operation plan generated by the operation plan generation device 1. The display 12 is provided with a display device such as a liquid crystal display or an organic electro-luminescence (EL) display, for example.

The process data storage 13 stores process data 131. The process data 131 includes information such as an operation record of the energy supply plant 3 and a record of energy demand of the building structure 2. The information is stored associated with a date and time, and a time interval can be set to a unit of one hour, for example.

The weather data storage 14 stores weather data 141. The weather data 141 includes weather information relating to weather, amount of sunshine, hours of sunshine, air temperature, humidity level, and the like, energy demand of the building structure 2, and energy generation by the energy supply plant 3. The information is stored associated with a data and time, and a time interval can be set to a unit of one hour, for example. Further, the weather data 141 includes a record of past weather information, and weather forecast information such as a weather report or the like.

The plant model memory 15 stores plant model data 151 and model parameter data 152.

The plant model data 151 is data that shows an aspect of the energy supply plant 3. The plant model data 151 shows, for example, a type and connectivity aspect of energy supply apparatuses provided to the energy supply plant 3.

The model parameter data 152 is data that shows details of energy supply devices provided to the energy supply plant 3. The model parameter data 152 includes, for example, a maximum energy output that each energy supply apparatus supplies, an output energy conversion efficiency with respect to energy input into each energy supply apparatus, and the like. Further, the model parameter data 152 includes data that shows energy output corresponding to weather conditions for the PV 312 and the like whose energy generation efficiency changes due to weather conditions. The model parameter data 152 includes data on the amount of energy capable of being stored by the storage battery 313, the heat tank 323, and the cooling tank 333. The model parameter data 152 also includes energy price per date and time for electric power received by the electric power receiver 311, biomass fuel consumed by the CGS 321, and gas consumed by the boiler 322. Further, the plant model data 151 includes data on primary energy conversion factors for electric power, gas, and biomass fuel.

The computation result memory portion 16 stores results of computation processing performed by the processor 16. The computation result memory portion 16 stores annual plan data 161, daily plan data 162, and ZEB multiplier data 163.

The annual planning data 16 shows an annual operation plan for energy supply apparatuses provided to the energy supply plant 3.

The daily plan data 162 shows a one day operation plan for energy supply apparatuses provided to the energy supply plant 3. The daily plan data 162 shows, for example, operation, stoppage, operation output levels, and the like for the energy supply apparatuses.

The ZEB multiplier data 163 indicates a set value of a ZEB multiplier. Details of ZRB multipliers are explained below.

The process data acquisitor 101, the weather data acquisitor 102, the operation plan transmission portion 103, the model input controller 111, the display controller 121, and the processor 17 function by, for example, a CPU executing a program stored in a memory device of the operation plan generation device 1.

The process data acquisitor 101 acquires process data of the energy supply plant 3 from the control device 5, through the communicator 10. The process data acquisitor 101 may also acquire process data directly from the energy supply plant 3. The process data acquisitor 101 stores acquired process data in the process data storage 13.

The weather data acquisitor 102 performs communications with the external communication server 6 through the communicator 10, and acquires weather data and weather forecast data that the external communication server 6 has acquired from the weather information server 8. The weather data acquisitor 102 stores the acquired weather data and weather forecast data in the weather data storage 14.

The operation plan transmission controller 103 reads in the daily plan data 162 from the computation result storage 16, and sends the read in data to the control device 5 through the communications portion 10.

The model input controller 111 stores the plant model data and the model parameter data received from the model input 11 in the plant model storage 15 as the plant model data 151 and the model parameter data 152, respectively.

The display 121 reads out the annual plan data 161 and the daily plan data 162 from the computation result storage 16, and displays an operation plan for the energy supply plant 3 in the display 12. The display controller 121 may also display, for example, hourly operation states of the energy supply apparatuses provided to the energy supply plant 3 in a variety of display formats, such as tabular form, graph form, or the like.

The processor 17 performs prediction of energy demand by the building structure 2, and generates an operation plan for the energy supply plant 3 in order to supply an amount of energy corresponding to the predicted demand amount.

The processor 17 is provided with a demand predictor 18 and an operation plan generator 19.

The demand predictor 18 performs prediction of the energy demand of the building structure 2 based on the process data 131 and on the weather data 141. The demand predictor 18 is provided with an annual demand predictor 181 and a daily demand predictor 182.

The annual demand predictor 181 predicts time changes in energy demand by the building structure 2 over a one year period. The annual demand predictor 181 acquires the process data 131 from the process data storage 13. Further, the annual demand predictor 181 acquires the weather data 141 from the weather data storage 14. The annual demand predictor 181 predicts time changes in energy demand over a one year period based on the acquired process data and the acquired weather data 141.

The annual demand predictor 181 computes, for example, average values of energy demand over several prior years, and computes time changes in average daily energy demand over a one year period. By thus considering the computed time changes in energy demand during one day, time changes in energy demand over a one year period can be computed.

Further, the annual demand predictor 181 computes, for example, average values of monthly energy demand per time period over the past one year period, and computes average single day time changes in energy demand for a one month period. These computations are performed for each month. The annual demand predictor 181 may also compute time changes in energy demand for average single days for 12 months. By considering that the computed time changes in daily energy demand continue per month, time changes in energy demand over a one year period can be predicted. The annual demand predictor 181 outputs annual demand prediction data illustrating predicted time changes in energy demand over a one year period to the operation plan generator 19.

The daily demand predictor 182 predicts time changes in energy demand by the building structure 2 over a one day period. The daily demand predictor 182 acquires the process data 131 from the process data storage 13. Further, the daily demand predictor 182 acquires the weather data 141 from the weather data storage 14. The daily demand predictor 182 predicts time changes in energy demand over a one day period based on the acquired process data 131 and the acquired weather data 141. The daily demand predictor 182 predicts time changes in energy demand over a one day period by using a regression model or the like for air temperature and energy demand, based on daily weather forecast for predicting energy demand. The daily demand predictor 182 outputs daily demand prediction data, illustrating predicted time changes in energy demand over a one day period, to the operation plan generator 19.

An annual operation plan generator 191 of the operation plan generator 19 generates a one year operation plan for the energy supply plant 3, based on the annual demand prediction data acquired from the annual demand predictor 181 and on the plant model data 151 and the model parameter data 152 acquired from the plant model storage 15. Equations relating to principles of a method of generating an operation plan used by the operation plan generator 19 are explained below.

$$\sum_{d=1}^{365} \sum_{t=0}^{23} \left( p_e(t)e_u(t) + p_g g_u(t) + p_o o_u(t) \right) \rightarrow \min \qquad \cdots (1)$$

A variable d indicates a day. A variable t indicates a time for cases where one day is shown by hours from 0 to 23. A variable $p_e(t)$ indicates a unit price for electric power (in Japanese yen / kWh) at a time t. Variables $p_g$ and $p_o$ indicate unit costs (in Japanese yen / kWh) for gas and biomass, respectively. A variable $e_u(t)$ indicates an amount of electric power received by the electric power receiver 311 at a time t. A variable $g_u(t)$ indicates an amount (kWh) of gas consumption by the boiler 322 at a time t. A variable $o_u(t)$ indicates an amount (kWh) of fuel consumption by the CGS 321 at a time t. The left hand side of EQ. 1 indicates a total energy cost needed for generating energy received by the building structure 2 during a one year period. In other words, the left hand side of EQ. 1 indicates the total amount of energy cost required during each time period by all of the energy supply apparatuses provided to the energy plant 3 as a value totaled over a one year period. Therefore the solution to EQ. 1 minimizes the total energy cost.

$$\sum_{d=1}^{365}\sum_{t=0}^{23}\left(\alpha_e(e_d(t)+e_R(t))+\alpha_g g_u(t)+\alpha_o o_u(t)\right)<\sum_{d=1}^{365}\sum_{t=0}^{23}\alpha_e\left(e_{CGS}(t)+e_{PV}(t)\right)$$
$$\cdots(2)$$

Variables $\alpha_e$, $\alpha_g$, and $\alpha_o$ indicate primary energy conversion coefficients for electric power, gas, and biomass fuel, respectively. Further, a variable $e_d(t)$ indicates an amount of electric power demand (kWh) by the building structure 2 at a time t. A variable $e_F(t)$ indicates total electric power consumption (kWh) of the air cooled refrigerator 331 and the water cooled refrigerator 332 at a time t. Variables $e_{CGS}(t)$ and $e_{PV}(t)$ indicate amounts of electric power (kWh) generated (kWh) by the CGS 321 and by the PV 312 at a time t, respectively.

That is, the left hand side of EQ. 2 indicates an amount of primary energy conversion for energy consumed, and the right hand side of EQ. 2 indicates an amount of primary energy conversion for generated renewable energy. EQ. 2 therefore indicates conditions for achieving ZEB.

EQ. 3 through EQ. 20 below are constraint conditions of objective function EQ. 1.

$$e_u(t)+e_{CGS}(t)+e_{PV}(t)+e_{ST}(t)-e_R(t)=e_d(t) \qquad \cdots(3)$$

A variable $e_{ST}(t)$ indicates an amount of discharged electric power (kWh) from the storage battery 313 at a time t. Further, for cases where the value of $e_{ST}(t)$ is negative, $e_{ST}(t)$ indicates an amount of stored electric power (kWh) in the storage battery 313. Therefore EQ. 3 shows a balance between electric power demand and supply.

$$c_R(t)+c_{ABR}(t)+c_{ST}(t)=c_d(t) \qquad \cdots(4)$$

A variable $c_R(t)$ indicates a total amount of heat output (kWh) of the air cooled refrigerator 331 and the water cooled refrigerator 332 at a time t. Variables $c_{ABR}(t)$ and $c_{ST}(t)$ indicate amounts of heat output (kWh) by the absorption refrigerator 334 and the cooling tank 333, respectively. Further, a variable $c_d(t)$ indicates an amount of cooling (kWh) demanded by the building structure 2 at a time t. For cases where $c_{ST}(T)$ is negative, $c_{ST}(t)$ indicates a cooling amount (kWh) stored in the cooling tank 333. Therefore EQ. 4 shows a balance between supply and demand of cooling.

$$h_{CGS}(t)+h_B(t)-h_{ABR}(t)+h_{ST}(t)=h_d(t) \qquad \cdots(5)$$

Variables $h_{CGS}(t)$, $h_B(t)$, and $h_{ST}(t)$ indicate amounts of heat (kWh) output by the CGS 321, the boiler 322, and the heat tank 323, respectively, at a time t. A variable $h_{ABR}$ indicates an amount of heat (kWh) input to the absorption refrigerator at a time t. A variable $h_d(t)$ indicates an amount of heat demand (kWh) by the building 2 at a time t. Further, for cases where $h_{ST}(t)$ is negative, $h_{ST}(t)$ indicates an amount of heat (kWh) stored in the heat tank 323. Therefore EQ. 5 shows a balance between supply and demand of heat.

$$W_{ST}(t)=W_{ST}(t-1)-e_{ST}(t) \qquad \cdots(6)$$

A variable $W_{ST}(t)$ indicates an amount of electricity (kWh) stored by the storage battery 313 at a time t.

$$Q_c(t) = Q_c(t-1) - c_{ST}(t) \qquad \cdots (7)$$

A variable $Q_c(t)$ indicates an amount of heat (kWh) stored by the cooling tank 333 at a time t.

$$Q_h(t) = Q_h(t-1) - h_{ST}(t) \qquad \cdots (8)$$

A variable $Q_h(t)$ indicates an amount of heat (kWh) stored by the heat tank 323.

$$h_{CGS}(t) = f_{CGS}^h(o_u(t)) \qquad \cdots (9)$$

$$e_{CGS}(t) = f_{CGS}^e(o_u(t)) \qquad \cdots (10)$$

$$h_B(t) = f_B(g_u(t)) \qquad \cdots (11)$$

$$c_R(t) = f_R(e_R) \qquad \cdots (12)$$

$$c_{ABR}(t) = f_{ABR}(h_{ABR}(t)) \qquad \cdots (13)$$

In EQ. 9 through EQ. 13, symbol f denotes a function. The functions f in EQ. 9 through EQ.13 illustrate formulas for calculating $h_{GCS}(t)$, $e_{CGS}(t)$, $h_B(t)$, $C_R(t)$, and $C_{ABR}(t)$, respectively.

$$\underline{W_{ST}} \leq W_{ST}(t) \leq \overline{W_{ST}} \qquad \cdots (14)$$

$$\underline{Q_c} \leq Q_c(t) \leq \overline{Q_c} \qquad \cdots (15)$$

$$\underline{Q_h} \leq Q_h(t) \leq \overline{Q_h} \qquad \cdots (16)$$

In EQ. 14 through EQ. 16, illustrate constraints regarding stored electric power capacity for the storage battery 313, stored heat capacity for the heat storage capacity for the heat tank 323, respectively.

$$\underline{h_{CGS}} \leq h_{CGS}(t) \leq \overline{h_{CGS}} \qquad \cdots (17)$$

$$\underline{e_{CGS}} \leq e_{CGS}(t) \leq \overline{e_{CGS}} \qquad \cdots (18)$$

EQ. 17 and EQ. 18 illustrate constraints regarding output heat amount and output electric power, respectively, for the CGS 321.

$$\underline{c_R} \leq c_R \leq \overline{c_R} \qquad \cdots (19)$$

EQ. 19 shows constraints regarding the total heat amount output by the air cooled refrigerator 331 and the water cooled refrigerator 332.

$$\underline{c_{ABR}} \leq c_{ABR} \leq \overline{c_{ABR}} \qquad \cdots (2\,0)$$

EQ. 20 shows constraints regarding heat amount output by the absorption refrigerator 334.

In order to minimize energy costs while bringing the building structure 2 closer to ZEB, an optimal solution to EQ. 1 may be acquired under the constraint conditions of EQ. 2 through EQ. 20. This problem is called an "annual operation plan problem" below. Among EQ. 2 through EQ. 20, in particular EQ. 3 through EQ. 20 involve constraint conditions for specific times, or constraint conditions extending before and after specific times. It is thus possible to handle constraint conditions per single day by solving the equations in order as time elapses.

In contrast, constraint condition EQ. 2 is a constraint condition covering a one year period. The amount of computations will become enormous to solve EQ. 2 as is. EQ. 21 below is obtained by using Lagrangian relaxation and incorporating Eq. 2 into objective function EQ. 1.

$$\sum_{d=1}^{365}\sum_{t=0}^{23}\left(p_e(t)e_u(t) + p_g g_u(t) + p_o o_u(t)\right)$$
$$+ \gamma \sum_{d=1}^{365}\sum_{t=0}^{23}\left(\alpha_e\left(e_d(t) + e_R(t)\right) + \alpha_g g_u(t) + \alpha_o o_u(t) - \alpha_e\left(e_{CGS}(t) + e_{PV}(t)\right)\right) \to \min$$
$$\cdots (2\,1)$$

A symbol $\gamma$ here shows a Lagrange multiplier, which is a value greater than zero. Further, the Lagrange multiplier $\gamma$ indicates a weighting of ZEB conditions achieved. The symbol $\gamma$ is referred to below as a ZEB multiplier. EQ. 24 below is found by using arranging EQ. 20 using EQ. 3.

$$\sum_{d=1}^{365}\sum_{t=0}^{23}\left\{\left(p_e(t) + \gamma\alpha_e\right)e_u(t) + \left(p_g + \gamma\alpha_g\right)g_u(t) + \left(p_o + \gamma\alpha_o\right)o_u(t) + \gamma\alpha_e e_{ST}(t)\right\} \to \min$$
$$\cdots (2\,2)$$

In EQ. 22, the sum total of the discharged electric power amount $e_{ST}(t)$ for the storage battery 313 over one year can be approximated as zero by repeated charging and discharging electricity. EQ. 23 below is thus obtained.

$$\sum_{d=1}^{365}\sum_{t=0}^{23}\left\{\left(p_e(t) + \gamma\alpha_e\right)e_u(t) + \left(p_g + \gamma\alpha_g\right)g_u(t) + \left(p_o + \gamma\alpha_o\right)o_u(t)\right\} \to \min$$
$$\cdots (2\,3)$$

By using Lagrangian relaxation, the objective function EQ. 23 can be considered from among the initial problem constraint condition equations EQ. 2 through EQ. 20, excluding EQ. 2 which is a constraint condition covering a one year period. Further, the objective function EQ. 23 can be found by substituting $p_c(t)$, $p_g$, and $p_o$ from the initial objective function EQ. 1 with $(p_c(t) + \gamma\alpha_c)$, $(p_g(t) + \gamma\alpha_g)$, and $(p_o(t) + \gamma\alpha_o)$, respectively. That is, the objective function EA. 23 can be taken as an energy cost minimization problem without the constraint conditions for achieving ZEB. The objective function EQ. 23 is an equation covering a one year period. Solving the objective function EQ. 23 under the constraint conditions EQ. 3 through EQ. 20 is referred to below as an annual operation plan relaxation problem. Further, solving the annual operation plan relaxation problem corresponds to solving a single day EQ. 24 below for 365 days under the constraint conditions EQ. 3 through EQ. 20. This daily problem is referred to below as a daily operation plan relaxation problem.

$$\sum_{t=0}^{23}\left\{\left(p_e(t) + \gamma\alpha_e\right)e_u(t) + \left(p_g + \gamma\alpha_g\right)g_u(t) + \left(p_o + \gamma\alpha_o\right)o_u(t)\right\} \to \min$$
$$\cdots (2\,4)$$

The ZEB multiplier $\gamma$ is explained next.

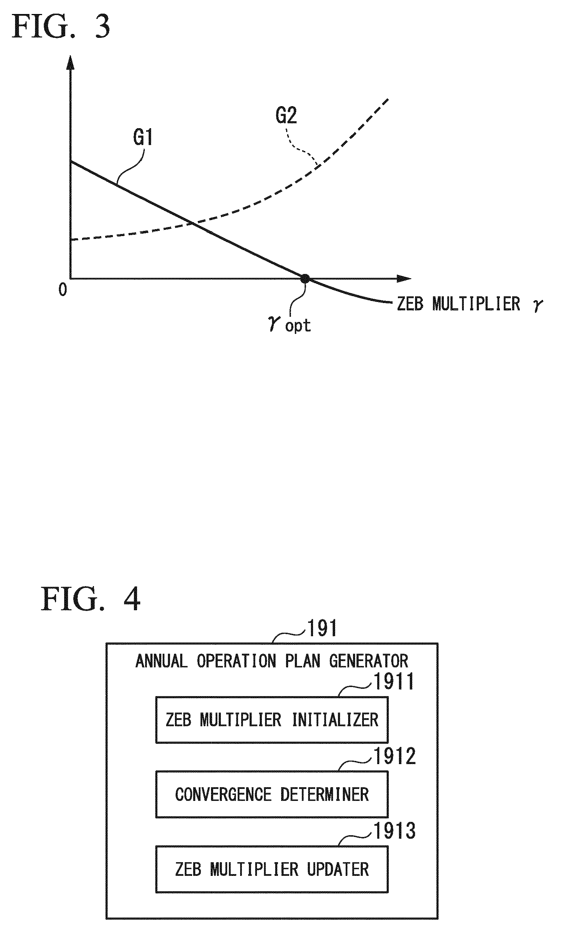

FIG. 3 a diagram illustrating an example of a relationship between a primary energy consumption amount of the energy supply plant 3 and energy cost.

A graph G1 illustrates changes corresponding to the ZEB multiplier $\gamma$ for the amount of primary energy consumption. A graph G2 shows changes corresponding to the ZEB multiplier $\gamma$ for energy cost. The ZEB multiplier $\gamma$ thus shows the weight of constraint conditions in order to achieve ZEB. Accordingly, as FIG. 3 shows, the amount of primary energy consumption relating to achieving ZEB becomes smaller as the ZEB multiplier $\gamma$ becomes larger. In contrast, energy cost becomes larger as the ZEB multiplier $\gamma$ becomes larger.

For example, the annual operation plan relaxation problem when the ZEB multiplier $\gamma$ is zero is a problem of minimizing only energy cost without considering ZEB constraints. Therefore, although a solution minimizes energy costs, the amount of primary energy consumption becomes positive, and ZEB is not achieved. In contrast, the annual operation plan relaxation problem when the ZEB multiplier $\gamma$ is made sufficiently large is a problem that focuses heavily on satisfying the ZEB multiplier ZEB constraints. Therefore, although a solution increases energy cost, the amount of primary energy consumption decreases, and may in fact become negative in certain cases. Accordingly, by computing the smallest ZEB multiplier $\gamma$, taken as $\gamma_{opt}$, in a range where the amount of primary energy consumed is zero or negative, the energy cost can be minimized while achieving ZEB.

An explanation of a configuration of the operation plan generation device 1 continues below.

FIG. 4 is a diagram illustrating an example of a configuration of the annual operation plan generator 191.

The annual operation plan generator 191 is provided with a ZEB multiplier initializer 1911, a convergence determiner 1912, and a ZEB multiplier updater 1913.

The ZEB multiplier initializer 1911 initializes the ZEB multiplier $\gamma$ upon generation of an operation plan. The ZEB multiplier initializer 1911 stores a predefined initialization value in ZEB initialization data 163 of the computation result storage 16. The ZEB multiplier initializer 1911 may set an initial value of zero for the ZEB multiplier $\gamma$, for example.

The convergence determiner 1912 determines whether or not a solution to EQ. 23 converges for a ZEB multiplier $\gamma$ in the ZEB multiplier data 163 from the computation result storage 16 under annual consumption prediction conditions indicated by annual demand prediction data acquired from the annual demand predictor 181. More specifically, the convergence determiner 1912 determines whether or not a solution to EQ. 23 converges by outputting daily data from the annual demand prediction data to the daily operation plan generator 192 and solving EQ. 24 in the daily operation plan generator 192 for 365 days. For cases where it is determined that the solution to EQ. 23 does not converge, the convergence determiner 1912 communicates the fact that the solution does not converge to the ZEB multiplier initializer 1913. For cases where it is determined that the solution to EQ. 23 does converge, an operation plan for a one year period is generated based on the computed solution. The convergence determiner 1912 stores the generated one year operation plan in the computed results memory 16 as the annual plan data 161.

The ZEB multiplier updater 1913 updates the ZEB multiplier shown by the ZEB multiplier data 163 stored in the computation result storage 16, and stores the updated ZEB multiplier $\gamma$ in the computed results memory portion 16, when a communication is received from the convergence determiner 1912 that a solution does not converge. The ZEB multiplier updater 1913 updates the ZEB multiplier $\gamma$ using an algorithm such as a bisection method or the like, for example.

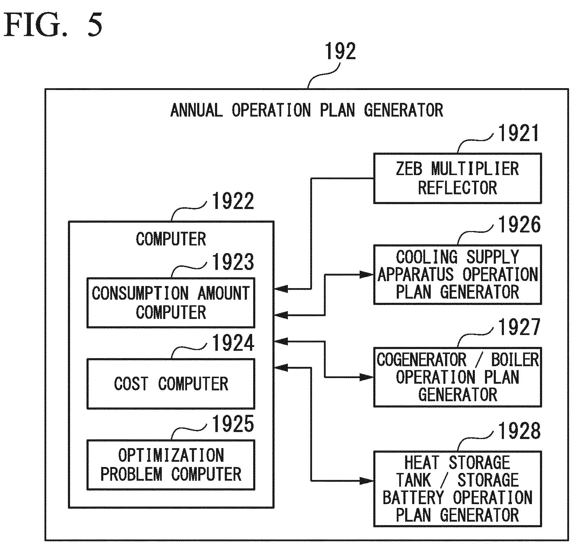

FIG. 5 is a diagram illustrating an example of a configuration of the daily operation plan generator 192.

The daily operation plan generator 192 generates a daily operation plan based on daily demand prediction data acquired from the daily demand predictor 192, or for single days of data from annual demand data acquired from the annual operation plan generator 191. Further, the daily operation plan generator 192 generates an operation plan in consideration of the construction condition equations EQ. 3 through EQ. 20 so as to satisfy those equations. The daily operation plan generator 192 is provided with a ZEB multiplier reflector 1921, a computer 1922, a cooling supply apparatus operation plan generator 1926, a cogenerator / boiler operation plan generator 1927, and a heat storage tank / storage battery operation plan generator 1928.

The ZEB multiplier reflector 1921 acquires the ZEB multiplier data 163 from the computation results memory 16, and reflects the ZEB multiplier $\gamma$ shown by the acquired ZEB multiplier data 163 in the ZEB multiplier $\gamma$ of EQ. 24.

The computer 1922 computes an optimal solution of the objective function EQ. 24 under the constraint conditions of EQ. 3 through EQ. 20 based on the ZEB multiplier $\gamma$ set by the ZEB multiplier reflector 1921. The computer 1922 is provided with a consumption amount computer 1923, a cost computer 1924, and an optimization problem computer 1925.

The consumption amount computer 1923 computes values relating to the amount of energy consumed by the energy supply plant 3. The consumption amount computer 1923 computes amounts of energy consumption based on, for example, the energy supply plant 3 operation plan generated by the cooling supply apparatus operation plan generator 1926, the cogenerator / boiler operation plan generator 1927, and the heat storage tank / storage battery operation plan generator 1928. The consumption amount computer 1923 then computes a primary energy reduced value of the consumption amount; namely, the amount of primary energy consumed.

The cost computer 1924 computes values relating to energy cost of energy consumed by the energy supply plant 3. The cost consumption portion 1924 computes energy costs based on, for example, the energy supply plant 3 operation plan generated by the cooling supply apparatus operation plan generator 1926, the cogenerator / boiler operation plan generator 1927, and the heat storage tank / storage battery operation plan generator 1928.

The optimization problem computer 1925 computes values of the left hand side of EQ. 24, for example, based on a primary energy consumption amount and an energy cost computed by the consumption amount computer 1923 and by the cost computer 1924. The optimization problem computer 1925 outputs values of the left hand side of EQ. 24, based on single days of data from annual consumption data, to the annual operation plan generator 191 as solutions to a one day portion of the daily operation plan relaxation problem.

The cooling supply apparatus operation plan generator 1926 acquires daily demand prediction data acquired from the daily demand predictor 182, or hourly cooling demand over a single day, taken from single day data in the annual demand data acquired from the annual operation plan generator 191. The cooling supply apparatus operation plan generator 1926 generates a cooling supply apparatus operation plan in order to supply cooling to the building structure 2, corresponding to the acquired hourly cooling demand. The cooling supply apparatus operation plan generator 1926 computes electric power and heat needed to operate the cooling supply apparatus, based on the generated operation plan. The computation is done by the computer 1922.

The cooling supply apparatus operation plan generator 1926 stores operation plans generated based on data daily demand prediction data acquired from the daily demand predictor 182 in the computation result storage 16 as the daily operation data 162. Further, the cooling supply apparatus operation plan generator 1926 stores operation plans generated based on single days of data from annual demand data acquired from the annual operation plan generator 191 in the computation result storage 16, with associated dates, as the yearly planning data 161.

The cogenerator / boiler operation plan generator 1927 generates an operation plan for the CGS 321 and the boiler 322. The cogenerator / boiler operation plan generator 1927 acquires daily demand prediction data acquired from the daily demand predictor 182, or hourly heat and electric power demand over a single day, taken from single day data in the yearly demand data acquired from the annual operation plan generator 191. The cogenerator / boiler operation plan generator 1927 generates an electric power supply apparatus and heat supply apparatus operation plan in order to supply electric power and heat to the building structure 2, corresponding to the acquired hourly electric power demand and heat demand. The cogenerator / boiler operation plan generator 1927 computes amounts for received electric power, biomass fuel, and gas needed to operate the heat supply apparatus and the electric power supply apparatus, based on the generated operation plan. The computation is done by the computer 1922.

The cogenerator / boiler operation plan generator 1927 stores operation plans generated based on data daily demand prediction data acquired from the daily demand predictor 182 in the computation result storage 16 as the daily operation data 162. Further, the cogenerator / boiler operation plan generator 1927 stores operation plans generated based on single days of data from annual demand data acquired from the annual operation plan generator 191 in the computation result storage 16, with associated dates, as the yearly planning data 161.

The heat storage tank / storage battery operation plan generator 1928 generates heat storage and heat discharge plans for the heat tank 323 and the cooling tank 333, and an electricity storage and discharge plan for the storage battery 313. The heat storage tank / storage battery operation plan generator 1928 generates heat storage plans and an electricity storage plan so as to perform heat discharge and electricity discharge when energy costs are high, and to perform heat storage and electricity storage when energy costs are low, in consideration of changes in energy costs over time. The heat storage tank / storage battery operation plan generator 1928 computes energy costs for operating the energy supply plant 3 based on the generated operation plans. The computation is done by the computer 1922.

The heat storage tank / storage battery operation plan generator 1928 stores operation plans generated based on data daily demand prediction data acquired from the daily demand predictor 182 in the computation result storage 16 as the daily operation data 162. Further, the cogenerator / boiler operation plan generator 1927 stores operation plans generated based on single days of data from annual demand data acquired from the annual operation plan generator 191 in the computation result storage 16, with associated dates, as the yearly planning data 161.

Operation of the operation plan generation device 1 is explained next.

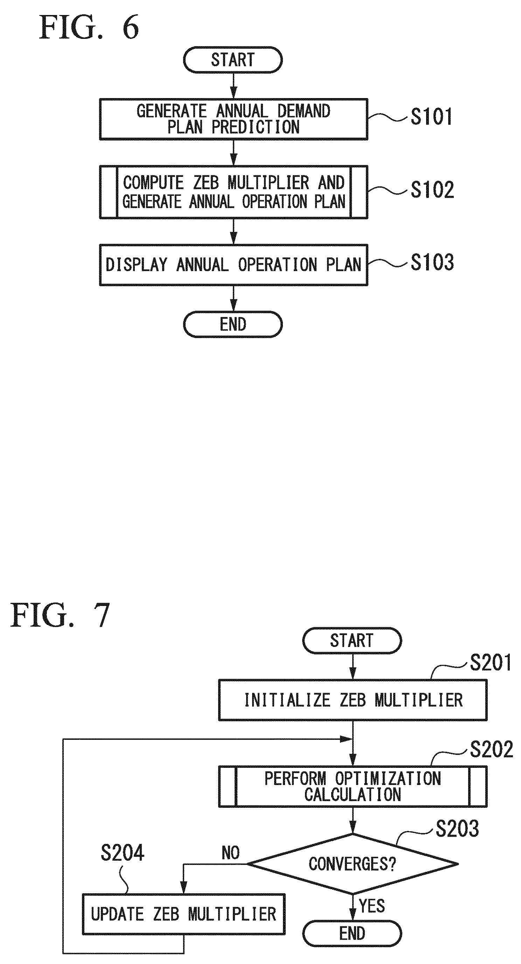

FIG. 6 is a flowchart illustrating an example of operation of the operation plan generation device 1.

First, the operation plan generation device 1 predicts annual energy demand by the building structure 2 based on past process data for the energy supply plant 3, and on past weather data (a step S101). Next, the operation plan generation device 1 computes the ZEB multiplier $\gamma$ and generates an annual operation plan based on the predicted annual energy demand (a step S102). The operation plan generation device 1 then displays the generated annual operation plan in a display portion (a step 103), and processing ends.

FIG. 7 is a flowchart illustrating an example of operation of the operation plan generation device 1.

First, the operation plan generation device 1 initializes the ZEB multiplier $\gamma$ (a step S201). Next, the operation plan generation device 1 solves the daily operation plan relaxation problem for 365 days based on the set value of the ZEB multiplier $\gamma$, and used the sum total thereof as a solution to perform computed optimization calculations (a step S202). The operation plan generation device 1 next determines whether or not the optimized calculation solution in the step S202 converges (a step S203). For cases where a solution of the annual operation plan relaxation problem does not improve to a value equal to or greater than a predefined threshold during a fixed number of iterations, for example, the operation plan generation device 1 determines that the optimized calculation solution converges.

For cases where the optimized calculation solution is determined to converge (YES in the step S203), the operation plan generation device ends processing. Further, for cases where the optimized calculation solution is determined to not converge (NO in the step S203), the operation plan generation device 1 updates the ZEB multiplier $\gamma$ (a step S204). The operation plan generation device 1 then repeats the processing of the step S202, and performs optimization calculations based on the updated ZEB multiplier $\gamma$.

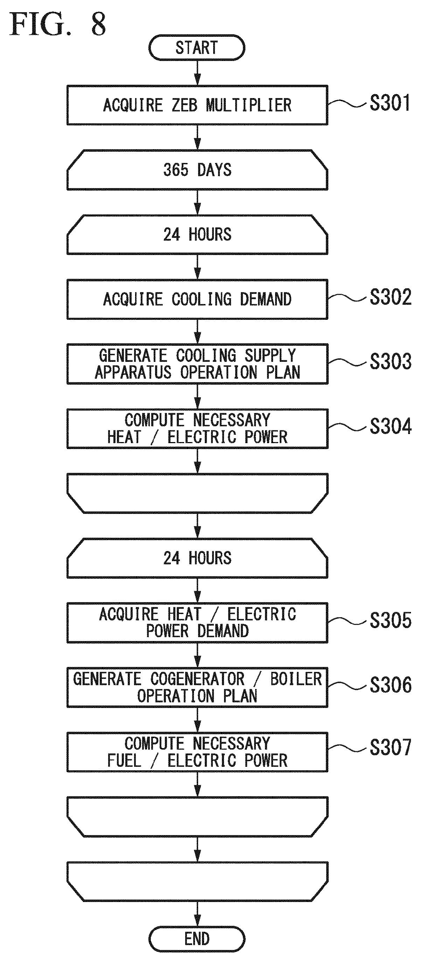

FIG. 8 is a flowchart illustrating a third example of operation of the operation plan generation device 1.

First, the operation plan generation device 1 obtains the ZEB multiplier $\gamma$ (a step S301), and next performs processes of steps S302 to S304 below for one day time intervals. The operation plan generation device 1 obtains the cooling demand for each time interval predicted in the step S101 of FIG. 6 (a step S302). Next, the operation plan generation device 1 generates a cooling supply apparatus operation plan in order to supply cooling corresponding to the acquired cooling demand (a step S303).

A cooling supply apparatus operation plan is decided in accordance with an operation priority order rank for each cooling supply apparatus. The operation priority order rank is determined using a unit price list for cooling generation, for example, and set in order from the cooling supply apparatus having the cheapest cooling generation unit price.

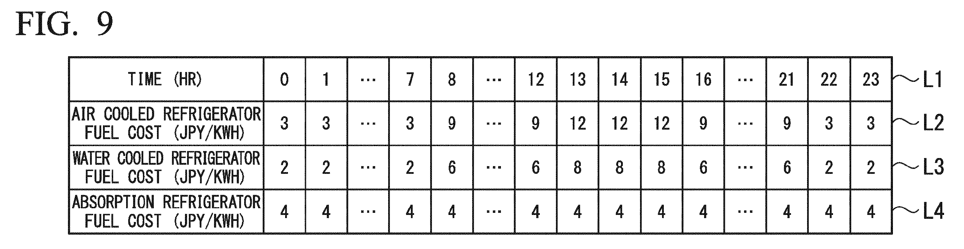

FIG. 9 a table illustrating an example of cooling generation unit cost for a cooling supply apparatuses provided to the energy supply plant 3.

The cooling generation unit cost table illustrated in FIG. 9 shows fuel costs for generating cooling per amount of heat (kWh), or electric power cost, for cases where each cooling supply apparatus is operated at a fixed costs. A row L1 in the table illustrated in FIG. 9 shows time. Further, a row L2 shows unit fuel cost needed in order for the air cooled refrigerator 331 to generate 1 kWh or cooling. A row L3 shows the unit price for fuel needed in order for the water cooled refrigerator 332 to generate 1 kWh of cooling. Further, a row L4 shows the unit fuel cost needed in order for the absorption refrigerator 334 to generate 1 kWh of cooling. The air cooled refrigerator 331 and the water cooled refrigerator 332 are electrically operated in the present embodiment, and therefore the rows L2 and L3 show electric power costs for generating a unit amount of cooling. Further, the absorption refrigerator 334 is a heating type, and therefore the row L4 shows the gas cost necessary in order to generate an amount of heat needed in order to generate a unit amount of cooling.

In the example of FIG. 9, the unit price for fuel needed in order to generate 1 kWh of cooling during the time periods of, for example, 12 midnight until 7am, at 10pm, and at 11pm, is lowest in order for the water cooled refrigerator 332, the air cooled refrigerator 331, and the absorption refrigerator 334. In contrast, the unit price for fuel needed in order to generate 1 kWh of cooling during the time periods of 8am until 9pm is lowest in order for the absorption refrigerator 334, the water cooled refrigerator 332, and the air cooled refrigerator 331. Therefore, in the time periods of 12 midnight until 7am, at 10pm, and atll pm, the operation priority order rank for the water cooled refrigerator 332 is 1, the operation priority order rank for the air cooled refrigerator 331 is 2, and the operation priority order rank for the absorption refrigerator 334 is 3. During the time period from 8am until 9pm, the operation priority order rank for the absorption refrigerator 334 is 1, the operation priority order rank for the water cooled refrigerator is 2, and the operation priority order rank for the air cooled refrigerator 331 is 3.

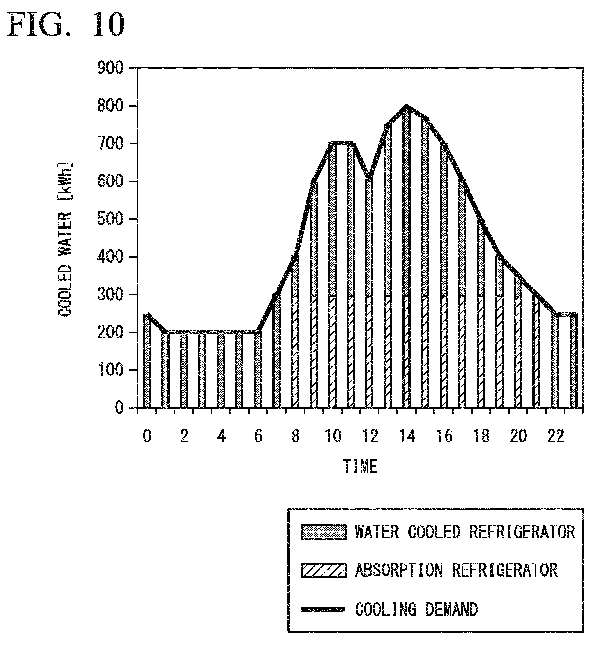

FIG. 10 is a diagram for explaining an example of an operation plan generation method by the operation plan generation device 1.

A graph illustrated in FIG. 10 shows energy amount for cooling (cold water) along the vertical axis, an shows time along the horizontal axis. Further, a line graph shows changes in cooling demand over time. Two bar graphs show cooling output by the water cooled refrigerator 332, and cooling output by the absorption refrigerator 334, respectively. Note that, as an example, the maximum output of the air cooled refrigerator 31 is 300 kWh, and the maximum output of the water cooled refrigerator 332 is 600 kWh, the maximum output of the absorption refrigerator is 300 kWh in the present embodiment.

In accordance with the operation priority order rank at different time periods explained using FIG. 9, the operation plan generation device 1 generates an operation plan so that the water cooled refrigerator 332, which has an operation priority rank of 1, supplies cooling in response to cooling demand in time periods from 12 midnight until 7am, at 10pm, and at 11pm. In these time periods the cooling demand is equal to or lower than the maximum output of the water cooled refrigerator 332, and therefore operation of the water cooled refrigerator 332 alone handles cooling demand. Further, in a time period from 8am until 9pm, the operation plan generation device 1 generates an operation plan so that absorption refrigerator 334, which has an operation priority order rank of 1, supplies cooling to its maximum output of 300 kWh. For cases where cooling exceeds 300 kWh the water cooled refrigerator 332, which has an operation priority order rank of 2, supplies a shortfall amount with respect to cooling demand. Further, the operation plan generation device 1 may also consider the cooling tank 333 when generating an operation plan for cooling supply devices. For example, in a high energy cost time period for the water cooled refrigerator 332, the cooling tank 333 may discharge heat and take on cooling load. The operation plan generation device 1 may generate an operation plan so that the cooling tank 333 generates stores heat in advance during time periods where the energy cost of the water cooled refrigerator 332 is low in order to be able to take on cooling load.

Returning to the explanation of FIG. 8, when the process of the step S303 is complete, the operation plan generation device 1 then computes necessary heat and electric power needed to operate the cooling supply apparatuses, based on the generated operation plan (a step S304). Next, the operation plan generation device 1 performs the processes of steps S305 through S307 below at time intervals of one day, for example. The operation plan generation device 1 acquires heat demand electric power demand for each time predicted in the step S101 of FIG. 1. Further, the operation plan generation device 1 adds heat and electric power necessary to operate the cooling supply apparatuses computed in the step S304 to the predicted heat demand and the predicted electric power demand (a step S305). Next, the operation plan generation device 1 generates operation plans for the CGS 321 and the boiler 322 in order to supply heat and electric power to the building structure 2 corresponding to the acquired heat demand and the electric power demand (a step S306).

The operation plan generation device 1 determines an operation priority order rank and generates operation plans for the CGS 321 and the boiler 322 here similarly to the cooling supply apparatuses. Further, the operation plan generation device 1 determines the operation priority order rank based on per unit heat generation showing a fuel cost necessary to generate a unit amount of heat. For the CGS 321, computations are made assuming that heat and electric power are generated and supplied at the same time. Generation of the operation plan for the CGS 321 and the boiler 322 may also be performed by the operation plan generation device 1 estimating an amount of electric power generation by the PV 321 based on weather conditions, and subtracting the estimated amount of electric power generation from the electric power demand.

The operation plan generation device 1 generates an operation plan that allows energy costs to be reduced by shifting heating load from the CGS 321 and the boiler 322 to heat discharged from the heat tank 323, similarly to operation of the cooling tank 333. Further, the storage battery 313 charges by an amount of reverser power flow amount for time periods when received electric power is negative and reverse power flow occurs. The operation plan generation device 1 discharges the storage battery 313 so that reverse power flow does not occur during periods when the received electric power amount is positive and the electric power unit cost is highest.

The operation plan generation device 1 computes amount of fuel and electric power necessary to operate the CGS 321 and the boiler 322, based on the operation plan generated during the step S306 (a step S307), and processing ends.

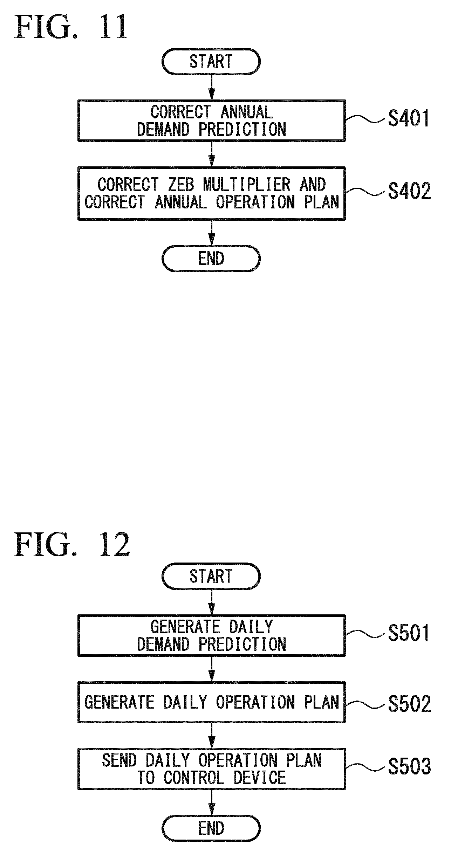

FIG. 11 is a flowchart illustrating an example of operation of the operation plan generation device 1 when revising an annual operation plan.

First, the operation plan generation device performs prediction correction when necessary, for example every month, to one year of energy demand by the building structure 2 (a step S401). However, prediction correction is not performed on energy demand for prior dates. Further, it is not necessary to perform prediction correction for cases where data used for making predictions does not change.

The operation plan generation device 1 then recomputes the ZEB multiplier $\gamma$, and corrects the annual operation plan, based on the actual operation performance of the energy supply plant 3 and on the annual demand prediction (a step S304), and processing ends. Actual values of primary energy consumption by the energy supply plant 3 may be used for past dates in recomputing the ZEB multiplier $\gamma$ and generating the annual operation plan.

FIG. 12 is a flowchart illustrating an example of operation of the operation plan generation device 1 when generating a daily operation plan while the energy supply plant 3 is in actual operation.

First, the operation plan generation device 1 performs daily energy demand prediction every day at a predefined time, for example, based on process data, past weather data, and future weather forecast data (a step S501). The operation plan generation device 1 then generates a daily operation plan for one day for the energy supply apparatuses provided to the energy supply plant 3, based on generated daily demand forecast data (a step S502). At this point a value computed in the step S102 of FIG. 6, or a value recomputed in the step S402 of FIG. 11, for example, may be used as the ZEB multiplier $\gamma$. The operation plan generation device 1 sends the generated one day operation plan to the control device 5, and processing ends.

The operation plan generation device 1 includes the consumption amount computer 1923, the cost computer 1924, and the operation plan generator 19, as described above. The consumption amount computer 1923 computes an amount of primary energy consumption by the energy supply plant 3 that generates energy to be supplied to the building structure 2. The cost computer 1924 computes a total cost for the energy supply plant 3 to generate energy. The operation plan generator 19 generates an operation plan for a plurality of energy supply apparatuses to achieve at least one of a target relating to the amount of primary energy consumption and a target relating to the total cost, based on the amount of primary energy consumption computed by the consumption amount computer 1923, and on the total cost computed by the cost computer 1924.

The operation plan generation device 1 thus generates operation plans in consideration of the amount of primary energy consumption and energy cost when generating operation plans for the energy supply plant 3, for example, and energy costs can thus be reduced while reducing the amount of primary energy consumed by the energy supply apparatuses provided to the energy supply plant 3. Therefore, the operation plan generation device 1 can achieve ZEB for the building structure 2 while operating the energy supply plant 3 at a low energy cost.

Further, the operation plan generator 19 generates operation plans for the energy supply plant 3 based values found by: multiplying values showing the amount of primary energy consumption, which are computed by the consumption amount computer 1923, by the ZEB multiplier γ, and then adding the result to values showing energy cost, which are computed by the cost computer 1924. The operation plan generation device 1 can thus solve annual operation plan problems using a small amount of computations. The operation plan generation device 1 can therefore generate, in a short amount of time, operation plans for reducing energy costs while reducing the amount of primary energy consumption by the energy supply apparatuses provided to the energy supply plant 3.

Further, the operation plan generation device 1 takes zero or a negative value for the amount of primary energy consumption, computed by the consumption amount computer 1923, as a predefined target. The operation plan generation device 1 can therefore achieve ZEB for the building structure 2 with additional certainty.

The consumption amount computer 1923 computes the amount of primary energy consumption in a predefined period of time, and the cost computer 1924 computes the energy cost during the predefined period of time. The operation plan generation device 1 thus generates an operation plan based on the amount of primary energy consumption and the energy cost over the predefined period of time, which may be one year, for example. A target for primary energy of zero or a negative number can thus be achieved with additional certainty in the predefined period of time.

Further, the consumption amount computer 1923 may compute a first amount of primary energy consumption during a predefined period of time, and also compute a second amount of primary energy consumption for an amount of time shorter than the predefined period of time. The cost computer 1924 may compute a first energy cost during the predefined period of time, and may also compute a second energy cost for the amount of time shorter than the predefined period of time. The operation plan generator 19 may correct an operation plan, which has been generated based on the first amount of primary energy consumption and the first energy cost, by using the second amount of primary energy consumption and the second energy cost.

The operation plan generation device 1 may thus correct an operation plan generated based on the amount of primary energy consumption and energy cost over a one year period by using, for example, an amount of primary energy consumption and energy cost over a period shorter than one year, such as one month or one day. The operation plan generation device 1 can therefore correct any differences between an operation plan generated for a long term target such as one year, and actual operation conditions for the energy supply plant 3, on a daily basis. Long term targets of achieving ZEB for the building structure 2 can therefore be achieved with additional certainty.

Second Embodiment

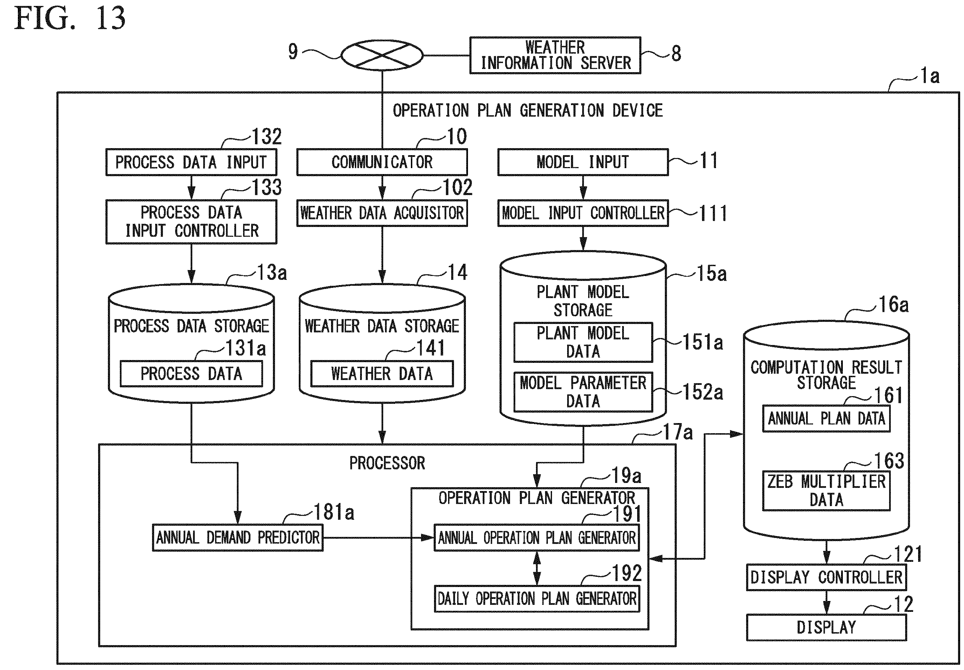

FIG. 13 is a diagram illustrating an example of an overall configuration of an operation plan generation device of a second embodiment.

An operation plan generation device 1a relating to a second embodiment is a simulator for simulating energy costs when achieving ZEB for a building structure. The simulation is accomplished by generating an operation plan for a virtual model of an energy supply plant that supplies energy such as electric power, cooling, heat, or the like to a building structure such as a building or a house. The operation plan generation device 1a is a server device, a personal computer, a tablet terminal device, a smart phone, or the like.

The operation plan generation device 1a is provided with, for example, an internal CPU and memory device. The memory device provided to the operation plan generation device 1a is provided with, for example, a hard disc drive (HDD), a flash memory, an electrically erasable programmable read only memory (EEPROM), a read only memory (ROM), a random access memory (RAM), or the like. The memory device stores various programs to be executed by the CPU, such as firmware and application programs. The memory device also stores results of processing executed by the CPU, and the like. Configurations having identical functions to those of the first embodiment use identical reference numerals as in the first embodiment, and an explanation thereof is omitted in the present embodiment.

The operation plan generation device 1a is connected to a network 9, and performs communication with the weather information server 8 through the network 9. The network 9 is an information communication network configured by, for example, a mobile telephone network, a personal handy phone system (PHS) network, a virtual private network (VPN), a dedicated communication line network, a wide area network (WAN), a local area network (LAN), a public switched telephone network (PSTN), or the like, or a combination thereof.

The operation plan generation device 1a possesses the communicator 10, the model input 11, the display 12, a process data storage 13a, the weather data storage 14, the plant model storage 15, a computation result storage 16a, a processor 17a, a weather data acquisitor 102a, the model input controller 111, the display controller 121, a process data input portion 132, and a process data input controller 133.

The process data storage 13a stores process data 131a. The process data 131a includes, for example, information on an operation record of an energy supply plant whose configuration is similar to a configuration of an energy supply plant simulation object showing plant model data 151a and model parameter data 152a stored by the plant model storage 15a. Further, the process data 131a includes information on an energy demand record for a building that is a simulation object. This information is stored with associate dates and times, and a time interval for the data may be, for example, units of one hour.

The plant model memory 15 stores the plant model data 151a and the model parameter data 152a.

The plant model data 151a is data that shows an aspect of an energy supply plant that is a simulation object. The plant model data 151a shows, for example, a type and connectivity aspect of energy supply apparatuses provided to the energy supply plant that is a simulation object. Further, the plant model data 151a includes data taken at one hour intervals on energy unit price for electric power received by an electric power receiver, biomass fuel consumed by the energy supply plant, and gas.

The model parameter data 152a is data that shows details of energy supply devices provided to the energy supply plant 3. The model parameter data 152a includes, for example, a maximum energy output that each energy supply apparatus supplies, an output energy conversion efficiency with respect to energy input into each energy supply apparatus, and the like. Further, the model parameter data 152a includes data that shows energy output corresponding to weather conditions for the PV 312 and the like whose energy generation efficiency changes due to weather conditions. The model parameter data 152a includes data on the amount of energy capable of being stored by a storage battery, a heat tank, and a cooling tank.

The computation result memory portion 16a is provided with annual plan data 161, and ZEB multiplier data 163.

The process data input portion 132 accepts process data inputs. The process data input portion 132 is provided with, for example, an input device such as a touch panel, a mouse, or a keyboard. Further, the process data input portion 132 may be connected to an external memory device that stores process data, and be provided with a communication interface for acquiring the process data.

The process data input controller 133 the weather data acquisitor 102, the operation plan transmission portion 103, the model input controller 111, the display controller 121, and the processor 17a function, for example, by the operation plan generation device 1a executing a program stored in a memory using a CPU.

The process data input controller 133 stores process data acquired by the process data input portion 132 in the process data storage 13a.

The processor 17a is provided with an annual demand predictor 181a and an operation plan generator 19a. The annual demand predictor 181 a performs processing similar to the annual demand predictor 181 provided to the operation plan generation device 1 of the first embodiment. However, the annual demand predictor 181a performs annual demand predictions for energy needed by a simulation object building structure based on the process data 131 a as a substitute for the process data 131.

The operation plan generator 19a performs processing similar to the operation plan generator 19 of the first embodiment. However, the operation plan generator 19a generates operation plans for a simulation object energy supply plant based on the plant model data 151a as a substitute for the plant model data 151, and based on the model parameter data 152a as a substitute for the model parameter data 152.

The operation plan generation device 1a is provided with the consumption amount computer 1923, the cost computer 1924, and the operation plan generator 19. The consumption amount computer 1923 computes an amount of primary energy consumed by a plurality of energy supply devices that supply energy to the building structure 2. The cost computer 1924 computes a total energy cost needed to generate energy supplied by a plurality of energy supply devices to the building structure 2. The operation plan generator 19 crates an operation plan for a plurality of energy supply devices so that a predefined target relating to an amount of primary energy consumption and energy cost is met, based on the primary energy consumption amount computed by the consumption amount computer 1923 and on the energy cost computed by the cost computer 1924.

The operation plan generation device 1 can thus perform simulations for energy supply plants and building structures, for example, determine whether of the building structures are capable of achieving ZEB, and compute energy costs need for cases where ZEB is achieved. It is therefore possible to determine whether or not ZEB can be achieved before beginning construction of an energy supply plant and a building structure to which energy is supplied.

Note that the configuration illustrated in FIG. 1 is an example, and there are no particular limitations placed on which energy supply apparatuses to use, or which energy supply apparatuses not to use. Further, connectivity aspects between energy supply apparatuses are not limited to that shown in FIG. 1. An energy supply plant may also be provided with energy supply apparatuses not shown in FIG. 1.

Note that although process data and weather data is recorded in unit intervals of one hour in the embodiments described above, process data and weather data may also be recorded in other unit intervals, such as 30 minutes, 15 minutes, 2 hours, or the like. Further, an operation plan generation device may similarly generate an operation plan at intervals of, for example, 30 minutes, 15 minutes, 2 hours, or the like instead of at 1 hour intervals. There are no specific limitations placed on which particular time intervals may be used.

Note that information relating to annual operation plan relaxation problems and daily operation plan relaxation problems may also be recorded as, for example, the plant model data 151 or the model parameter data 152 of the plant model storage 15, or the plant model data 151 a and the model parameter data 152a of the plant model storage 15a.

By using at least one of the embodiments explained above, the net amount of primary energy consumption by a building structure can be reduced to zero or made negative because an operation plan is generated based on technical characteristics of primary energy and energy cost. ZEB can be achieved while minimizing energy costs are minimized and operating an energy supply plant.

While certain embodiments have been described, the embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirits of the inventions.

Note that the operation plan generation devices 1, 1a, and a portion of the control device 5, may be implemented by using a computer. For example, the process data acquisitor 101, the weather data acquisitor 102, the operation plan transmission portion 103, the model input controller 111, the display controller 121, the processor 17, the demand predictor 18, the annual demand predictor 181, the daily demand predictor 182, the operation plan generator 19, the annual operation plan generator 191, the daily operation plan generator 192, the ZEB multiplier initializer 1911, the convergence determiner 1922, the consumption amount computer 1923, the cost computer 1924, the optimization problem computer 1925, the cooling supply apparatus operation plan generator 1926, the cogenerator / boiler operation plan generator 1927, the heat storage tank / storage battery operation plan generator 1928, and the like may be implemented by using a computer. In that case, a program for achieving functions of the devices implemented by using a computer may be recorded on a computer readable storage medium. The program stored on the storage medium may be read in and run by a computer system, thus achieving the functions. Note that computer system is a computer system computer system built in to the operation plan generation devices 1, 1a, or the control device 5, and includes an operating system (OS), hardware such as peripheral equipment, and the like.

Further, computer readable storage medium may be a removable medium such as a flexible disk, a magneto-optical disc, a ROM, a CD-ROM, or the like, or a recording medium build into a computer such as hard disk or the like. In addition, computer readable recording medium may also be a medium that dynamically stores a program for a short period of time such as a communication line when sending a program through a network such as the Internet, or when sending a program through a communication line such as a telephone line or the like. In this case computer readable recording medium also includes volatile memory within a computer system that becomes a server or a client and stores a program for a fixed amount of time. Further, a program may achieve a portion of the functions described above, and a program may be combined with a program already recorded in a computer to achieve the functions described above.

Further, a portion of, or the entirety of, the operation plan generation devices 1, 1a, and the control device 5 in the embodiments described above may also be achieved using an integrated circuit made using large scale integration (LSI), or the like. Each functional portion of the operation plan generation devices 1, 1a, and the control device 5 may be made into individual processors, and a portion or, or the entirety of, the functions may also be integrated together and made into a single processor. Techniques for making integrated circuits are not limited to LSI, and dedicated circuits or general purpose processors may also be used to achieve the functions described above. When alternative techniques for integrating circuits arise due to developments in semiconductor technology, integrated circuits made using those techniques may also be employed.

**Claims**

1. An operation plan generation device comprising:

   a consumption amount computer configured to compute an amount of primary energy consumption to be consumed by a plurality of energy supply apparatuses that generates energy to be supplied to a load;
   a cost computer configured to compute a total cost for the plurality of energy supply apparatuses to generate energy to be supplied to the load; and
   an operation plan generator configured to generate an operation plan for the plurality of energy supply apparatuses to achieve at least one of a target relating to an amount of primary energy consumption and a target relating to the total cost, based on the amount of primary energy consumption computed by the consumption amount computer, and on the total cost computed by the cost computer.

2. The operation plan generation device according to claim 1, wherein the operation plan generator configured to generate the operation plan for the plurality of energy supply apparatuses based on: a value obtained by multiplying the amount of primary energy consumption computed by the consumption amount computer by a coefficient; and a value obtained by adding an addition value to the cost computed by the cost computer.

3. The operation plan generation device according to claim 1 or claim 2, wherein the predefined target is the amount of primary energy consumption computed by the consumption amount computer is equal to zero or is a negative value.

4. The operation plan generation device according to any one of claims 1 to 3, wherein the consumption amount computer is configured to compute the amount of primary energy consumption for a predefined period of time, and the cost computer computes the cost for the predefined period of time.

5. The operation plan generation device according to claim 4, wherein:

the consumption computer is configured to compute a first value of an amount of primary energy consumption for a first period of time, and computes a second value of an amount of primary energy consumption for a second period of time;
the cost computer is configured to compute a first value of cost for the first period of time, and computes a second value of cost for the second period of time; and
the operation plan generator is configured to modify the operation plan generated based on the first value of the amount of primary energy consumption, and on the first value of the cost, by using the second value of the amount of primary energy consumption and the second value of the cost.

6. A control device for controlling a plurality of energy supply apparatuses based on an operation plan for the plurality of energy supply apparatuses generated by an operation plan generation device according to any one of claims 1 through 5.

7. A method of generating an operation plan, the method comprising:

a consumption amount computation process by an operation plan generation device for computing an amount of primary energy consumption by a plurality of energy supply apparatuses that generates energy to be supplied to a load;
a cost computation process by an operation plan generation device for computing a total cost for the plurality of energy generation apparatus to generate energy to be supplied to the load; and
an operation plan generation process by an operation plan generation device to generate an operation plan for the plurality of energy supply devices to achieve at least one of a target relating to the amount of primary energy consumption and a target relating to the total cost, based on the amount of primary energy consumption computed by the consumption amount computation process and on the total cost computed by the cost computation process.

8. A storage medium that stores a program for implementing:

a consumption amount computation for computing an amount of primary energy consumption by a plurality of energy supply apparatuses that generates energy to be supplied to a load;
a cost computation for computing a total cost for the plurality of energy generation apparatus to generate energy to be supplied to the load; and
an operation plan generation for generating an operation plan for the plurality of energy supply devices to achieve at least one of a target relating to the amount of primary energy consumption and a target relating to the total cost, based on the amount of primary energy consumption computed by the consumption amount computation and on the total cost computed by the cost computation.

# FIG. 1

WEATHER INFORMATION SERVER — 8

7

CONTROL DEVICE — 5

OPERATION PLAN GENERATION DEVICE — 1

EXTERNAL COMMUNICATION SERVER — 6

4

ENERGY SUPPLY PLANT — 3

BUILDING STRUCTURE — 2

ELECTRIC POWER RECEIVER — 311

ELECTRICITY

ELECTRIC POWER LOAD — 21

PV — 312

COOLING

AIR COOLED REFRIGERATOR — 331

COOLING LOAD — 23

WATER COOLED REFRIGERATOR — 332

STORAGE BATTERY — 313

COOLING TANK — 333

ABSORPTION REFRIGERATOR — 334

BIOMASS → CGS — 321

HEAT

HEATING LOAD — 22

GAS → BOILER — 322

HEAT TANK — 323

EP 3 096 285 A1

FIG. 2

OPERATION PLAN GENERATION DEVICE ~1

~10 COMMUNICATOR

~11 MODEL INPUT

~101 PROCESS DATA ACQUISITOR
~102 WEATHER DATA ACQUISITOR
~111 MODEL INPUT CONTROLLER
~103 OPERATION PLAN TRANSMISSION CONTROLLER

~13 PROCESS DATA STORAGE
~131 PROCESS DATA

~14 WEATHER DATA STORAGE
~141 WEATHER DATA

~15 PLANT MODEL STORAGE
~151 PLANT MODEL DATA
~152 MODEL PARAMETER DATA

~16 COMPUTATION RESULT STORAGE
~161 ANNUAL PLAN DATA
~162 DAILY PLAN DATA
~163 ZEB MULTIPLIER DATA

~17 PROCESSOR

~18 DEMAND PREDICTOR
~181 ANNUAL DEMAND PREDICTOR
~182 DAILY DEMAND PREDICTOR

~19 OPERATION PLAN GENERATOR
~191 ANNUAL OPERATION PLAN GENERATOR
~192 DAILY OPERATION PLAN GENERATOR

~121 DISPLAY CONTROLLER
~12 DISPLAY

EP 3 096 285 A1

19

FIG. 3

FIG. 4

FIG. 5

192

**ANNUAL OPERATION PLAN GENERATOR**

1921

| ZEB MULTIPLIER REFLECTOR |

1922

**COMPUTER**

1923

| CONSUMPTION AMOUNT COMPUTER |

1924

| COST COMPUTER |

1925

| OPTIMIZATION PROBLEM COMPUTER |

1926

| COOLING SUPPLY APPARATUS OPERATION PLAN GENERATOR |

1927

| COGENERATOR / BOILER OPERATION PLAN GENERATOR |

1928

| HEAT STORAGE TANK / STORAGE BATTERY OPERATION PLAN GENERATOR |

## FIG. 6

```
        ┌─────────┐
        │  START  │
        └─────────┘
             │
             ▼
  ┌─────────────────────────┐
  │  GENERATE ANNUAL DEMAND │ ～S101
  │     PLAN PREDICTION     │
  └─────────────────────────┘
             │
             ▼
  ┌─────────────────────────┐
  │ COMPUTE ZEB MULTIPLIER AND │ ～S102
  │ GENERATE ANNUAL OPERATION PLAN │
  └─────────────────────────┘
             │
             ▼
  ┌─────────────────────────┐
  │ DISPLAY ANNUAL OPERATION PLAN │ ～S103
  └─────────────────────────┘
             │
             ▼
        ┌─────────┐
        │   END   │
        └─────────┘
```

## FIG. 7

```
              ┌─────────┐
              │  START  │
              └─────────┘
                   │                ～S201
                   ▼
      ┌─────────────────────────┐
      │ INITIALIZE ZEB MULTIPLIER │
      └─────────────────────────┘
                   │
    ┌──────────────┤                ～S202
    │              ▼
    │  ┌─────────────────────────┐
    │  │  PERFORM OPTIMIZATION   │
    │  │      CALCULATION        │
    │  └─────────────────────────┘
    │              │                ～S203
    │              ▼
  S204      NO  ◇───────────◇
    │    ┌───────│ CONVERGES? │
    │    │       ◇───────────◇
    │    ▼              │ YES
  ┌─────────────────┐   ▼
  │ UPDATE ZEB      │ ┌─────────┐
  │ MULTIPLIER      │ │   END   │
  └─────────────────┘ └─────────┘
```

# FIG. 8

```
                    ┌─────────────┐
                    │    START    │
                    └──────┬──────┘
                           ▼
        ┌───────────────────────────────────┐
        │    ACQUIRE ZEB MULTIPLIER          │  ～S301
        └───────────────────┬───────────────┘
                           ▼
        ┌───────────────────────────────────┐
        │             365 DAYS              │
        └───────────────────┬───────────────┘
                           ▼
        ┌───────────────────────────────────┐
        │             24 HOURS              │
        └───────────────────┬───────────────┘
                           ▼
        ┌───────────────────────────────────┐
        │      ACQUIRE COOLING DEMAND        │  ～S302
        └───────────────────┬───────────────┘
                           ▼
        ┌───────────────────────────────────┐
        │    GENERATE COOLING SUPPLY         │  ～S303
        │    APPARATUS OPERATION PLAN        │
        └───────────────────┬───────────────┘
                           ▼
        ┌───────────────────────────────────┐
        │     COMPUTE NECESSARY              │  ～S304
        │   HEAT / ELECTRIC POWER            │
        └───────────────────┬───────────────┘
                           ▼
        ┌───────────────────────────────────┐
        │                                   │
        └───────────────────┬───────────────┘
                           ▼
        ┌───────────────────────────────────┐
        │             24 HOURS              │
        └───────────────────┬───────────────┘
                           ▼
        ┌───────────────────────────────────┐
        │      ACQUIRE HEAT / ELECTRIC       │  ～S305
        │         POWER DEMAND               │
        └───────────────────┬───────────────┘
                           ▼
        ┌───────────────────────────────────┐
        │  GENERATE COGENERATOR / BOILER     │  ～S306
        │         OPERATION PLAN             │
        └───────────────────┬───────────────┘
                           ▼
        ┌───────────────────────────────────┐
        │      COMPUTE NECESSARY             │  ～S307
        │    FUEL / ELECTRIC POWER           │
        └───────────────────┬───────────────┘
                           ▼
        ┌───────────────────────────────────┐
        │                                   │
        └───────────────────┬───────────────┘
                           ▼
        ┌───────────────────────────────────┐
        │                                   │
        └───────────────────┬───────────────┘
                           ▼
                    ┌─────────────┐
                    │     END     │
                    └─────────────┘
```

## FIG. 9

| TIME (HR) | 0 | 1 | ... | 7 | 8 | ... | 12 | 13 | 14 | 15 | 16 | ... | 21 | 22 | 23 | ~L1 |
|---|---|---|---|---|---|---|---|---|---|---|---|---|---|---|---|---|
| AIR COOLED REFRIGERATOR FUEL COST (JPY/KWH) | 3 | 3 | ... | 3 | 9 | ... | 9 | 12 | 12 | 12 | 9 | ... | 9 | 3 | 3 | ~L2 |
| WATER COOLED REFRIGERATOR FUEL COST (JPY/KWH) | 2 | 2 | ... | 2 | 6 | ... | 6 | 8 | 8 | 8 | 6 | ... | 6 | 2 | 2 | ~L3 |
| ABSORPTION REFRIGERATOR FUEL COST (JPY/KWH) | 4 | 4 | ... | 4 | 4 | ... | 4 | 4 | 4 | 4 | 4 | ... | 4 | 4 | 4 | ~L4 |

FIG. 10

WATER COOLED REFRIGERATOR

ABSORPTION REFRIGERATOR

COOLING DEMAND

## FIG. 11

```
        ( START )
           │
           ▼
┌──────────────────────┐
│    CORRECT ANNUAL    │──── S401
│  DEMAND PREDICTION   │
└──────────────────────┘
           │
           ▼
┌──────────────────────────┐
│ CORRECT ZEB MULTIPLIER AND│──── S402
│ CORRECT ANNUAL OPERATION PLAN│
└──────────────────────────┘
           │
           ▼
        (  END  )
```

## FIG. 12

```
        ( START )
           │
           ▼
┌──────────────────────┐
│    GENERATE DAILY    │──── S501
│  DEMAND PREDICTION   │
└──────────────────────┘
           │
           ▼
┌──────────────────────────┐
│ GENERATE DAILY OPERATION PLAN│──── S502
└──────────────────────────┘
           │
           ▼
┌──────────────────────────┐
│  SEND DAILY OPERATION PLAN │──── S503
│     TO CONTROL DEVICE      │
└──────────────────────────┘
           │
           ▼
        (  END  )
```

FIG. 13

# EP 3 096 285 A1

| | INTERNATIONAL SEARCH REPORT | International application No. |
|---|---|---|
| | | PCT/JP2014/082809 |

**A. CLASSIFICATION OF SUBJECT MATTER**
*G06Q50/16(2012.01)i, G06Q50/06(2012.01)i*

According to International Patent Classification (IPC) or to both national classification and IPC

**B. FIELDS SEARCHED**

Minimum documentation searched (classification system followed by classification symbols)
G06Q50/16, G06Q50/06

Documentation searched other than minimum documentation to the extent that such documents are included in the fields searched
Jitsuyo Shinan Koho       1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2013-174412 A  (Toshiba Corp.),<br>05 September 2013 (05.09.2013),<br>paragraphs [0014] to [0143]<br>& US 2014/0094980 A1    & WO 2013/128953 A1<br>& CN 103403465 A          & SG 192568 A1<br>& EP 2821724 A1 | 1,4,6-8<br>3,5<br>2 |
| X<br>Y<br>A | WO 2011/105070 A1  (Panasonic Corp.),<br>01 September 2011 (01.09.2011),<br>paragraphs [0028] to [0186]<br>& US 2012/0065793 A1    & EP 2541716 A1<br>& CN 102414951 A | 1,4,6-8<br>3,5<br>2 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 February 2015 (02.02.15) | 24 February 2015 (24.02.15) |

| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |
|---|---|

Form PCT/ISA/210 (second sheet) (July 2009)

28

**INTERNATIONAL SEARCH REPORT**

| International application No. |
|---|
| PCT/JP2014/082809 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-002929 A (Nippon Telegraph and Telephone Corp.), 06 January 2011 (06.01.2011), entire text; all drawings (Family: none) | 1-8 |
| A | JP 2005-086953 A (Nippon Telegraph and Telephone Corp.), 31 March 2005 (31.03.2005), entire text; all drawings (Family: none) | 1-8 |
| A | JP 2010-237745 A (Tokyo Gas Co., Ltd.), 21 October 2010 (21.10.2010), entire text; all drawings (Family: none) | 1-8 |
| A | JP 9-026804 A (Dai-Dan Co., Ltd.), 28 January 1997 (28.01.1997), entire text; all drawings (Family: none) | 1-8 |

Form PCT/ISA/210 (continuation of second sheet) (July 2009)

**EP 3 096 285 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013174412 A